# EUROPÄISCHE PATENTSCHRIFT

(11) **EP 2 411 707 B1**
(45) Veröffentlichungstag und Bekanntmachung des Hinweises auf die Patenterteilung: **08.05.2013**
(21) Anmeldenummer: 10713124.5
(22) Anmeldetag: 26.03.2010
(51) Int. Cl.: F16H 57/027, F16H 57/04

(54) **STRANGGUSSGETRIEBE MIT HITZEABSCHIRMUNG**
CONTINUOUS CASTING GEARBOX COMPRISING HEAT SHIELDING
TRANSMISSION POUR COULEE CONTINUE PRESENTANT UNE PROTECTION CONTRE LA CHALEUR

(30) Priorität: 27.03.2009 DE 102009015380
(43) Veröffentlichungstag der Anmeldung: 01.02.2012
(73) Patentinhaber: SMS Siemag AG, 40237 Düsseldorf (DE)
(72) Erfinder: BROTZKI, Herbert, 47057 Duisburg (DE)
(74) Vertreter: Klüppel, Walter
(86) Internationale Anmeldenummer: PCT/EP2010/001936
(87) Internationale Veröffentlichungsnummer: WO 2010/108696

(56) Entgegenhaltungen:
- EP-A2- 0 990 820
- DE-A1- 3 150 659
- DE-A1- 19 918 229
- DE-C- 727 085
- US-A- 1 639 680

## Beschreibung

### Gebiet der Erfindung

Die Erfindung umfasst ein Stranggussgetriebe, das zum Antrieb von Rollen bzw. Walzen in Walzgerüsten einer Stranggießanlage Verwendung findet. Das Gehäuse des Getriebes weist eine Hitzeabschirmung auf.

### Stand der Technik

Im Stand der Technik der Getriebe sind Kühleinrichtungen vorgesehen, die vor allem dazu dienen, die Getriebetemperaturen zu begrenzen, die durch die mechanische Reibung innerhalb des Getriebes entstehen und ohne eine geeignete Kühlung zu hoch ansteigen würden. In der Regel befindet sich daher innerhalb eines Getriebes Öl, das zum Beispiel durch ein entsprechend geformtes Getriebegehäuse über Kühlrippen durch Luft gekühlt wird.

Im speziellen Bereich der Stranggießanlagen ergibt sich eine gesteigerte Anforderung an die Kühlung der Getriebe: Durch den zum Teil Tage andauernden ununterbrochenen Gießbetrieb sind die Stranggussgetriebe sehr hohen Temperaturen bis zu 1000°C über eine sehr lange Zeit ausgesetzt. Arbeitet ein Stranggussgetriebe in einem mehradrigen Stranggussbetrieb, liegt zudem eine sehr starke Wärmestrahlung durch die heißen benachbarten Stränge vor.

Ein übliches Verfahren zur Getriebekühlung ist die Anwendung von Ölumlaufschmierungen mit Ölrückkühlung. Dieses System hat den Nachteil, dass zunächst die gesamte Wärme vom Getriebe aufgenommen werden muss, um dann an das Öl weitergeleitet und über Ölwärmetauscher abgeführt zu werden. Aufgrund der extremen Bedingungen im Stranggussbetrieb, eignet sich ein solches Verfahren nicht zur alleinigen Kühlung eines Stranggussgetriebes.

Möglich sind im Allgemeinen auch Maßnahmen, bei denen im Bereich des Ölreservoirs des Getriebes Elemente mit Wasser- oder einer zusätzlichen Ölkühlung vorgesehen sind.

Ein solches Beispiel ist in DE 60 2005 002 651 gezeigt, wobei in einer Industrieantriebseinheit Kühlelemente, die unterhalb des empfohlenen Ölstands des Gehäuses der Antriebseinheit angeordnet sind, das Ölreservoir kühlen. Zudem kann es vorgesehen sein, dass Kühlelemente auch in dem Bereich des Gehäuses angeordnet sind, der im Betrieb der Industrieantriebseinheit mit Öl bespritzt wird. Ein solches System, das im Prinzip das Ölreservoir des Getriebes kühlen soll, kann allerdings keine umfassende und ausreichende Hitzeabschirmung des Stranggussgetriebes im Gießbetrieb gewährleisten.

EP 0853 225 A2 zeigt ein Getriebe, das eine Öffnung besitzt, in die eine Wärmetauscherplatte in Form eines Deckels eingesetzt wird. Diese ist mit Kühlmittel gefüllt und besitzt einen Zu- und einen Ablauf und ist profiliert. Eine solche Anordnung hat jedoch den Nachteil, dass sie nicht der Abschirmung vor äußerer Hitzeeinwirkung dienen kann. Die Profilierung verstärkt sogar die Hitzeübertragung zum Getriebeinneren hin. Vorzugsweise sind sogar Leitbleche ins Getriebeinnere vorgesehen, die eine solche nachteilige Hitzeübertragung noch verstärken würden. Zudem kann der Deckel nicht zur Abschirmung des gesamten Getriebes dienen, da dieser lediglich einen kleinen Bereich des Getriebes abdeckt.

Ähnliche Nachteile für die Hitzeabschirmung weist die Vorrichtung der WO 2007/124885 A2 auf, in der ein Kühlmodul für ein Getriebe beschrieben ist. Auch hier wird das Kühlmodul in eine Öffnung des Getriebes eingesetzt, das nach innen und nach außen hin gerichtete Kühlrippen aufweist und von Kühlmittel durchströmt wird.

Die Patentschrift DE 36 06 963 C2 offenbart einen Maschinengehäusemantel der als Ölkühler ausgebildet ist. Dieser Mantel ist für Getriebe kubischer Bauform vorgesehen und weist radiale Stege und Rippen auf. Die Stege und Rippen dienen der bestmöglichen Wärmeübertragung zwischen dem Getriebe und der Umgebung des Getriebes. Ein solches oder ein ähnliches System kann nicht zur Abschirmung eines Stranggussgetriebes dienen.

Die Patentschrift DE 727 085 C beschreibt ein von einem Kühlmittel umflossenes Getriebe mit einem Kühlwassermantel, der außen von einer Isolierstoffschicht umgeben ist.

Die EP 0 990 820 A2 betrifft einen Antrieb mit einem in einem Motorgehäuse angeordneten Motor und einem daran angeschlossenen Getriebe, wobei zumindest in einem Teil des Getriebegehäuses und bzw. oder im Getriebedeckel Kühlkanäle zum Führen des Kühlmittels angeordnet sind.

Die Druckschrift DE 31 50 659 A1, die als nächster Stand der Technik angesehen wird, offenbart ein Stranggussgetriebe mit einem Gehäuse und mindestens einer wasserführenden Kammer, welche das Gehäuse unmittelbar umgibt, so dass das Stranggussgetriebe vor äußeren Hitzeeinflüssen abgeschirmt ist. Die wasserführende Kammer hat mindestens einen Wasserzulauf und einen Wasserablauf.

Ausgehend von diesem Stand der Technik liegt der Erfindung die Aufgabe zugrunde, für ein bekanntes Stranggussgetriebe eine wirkungsvollere Abschirmungsvorrichtung zur Kühlung des Stranggussgetriebes bereit zu stellen, wobei die Abschirmungsvorrichtung für baugleiche Getriebe wieder verwendbar sein soll.

Diese Aufgabe wird durch den Gegenstand des Patentanspruchs 1 gelöst. Dieser ist dadurch gekennzeichnet, dass das Stranggussgetriebe Kühlplatten umfasst, die an der Außenseite des Getriebegehäuses angeordnet und gegenüber der Außenwand abgedichtet sind und wobei die wasserführende Kammer durch den Raum zwischen den Kühlplatten und der Außenseite des Getriebegehäuses gebildet ist und dass die Kühlplatten abnehmbar sind und/oder Wartungsöffnungen besitzen.

Demnach umfasst ein Stranggussgetriebe ein Gehäuse, wobei das Getriebegehäuse unmittelbar mit wasserführenden Kammern umgeben ist, die mindestens einen Wasserzulauf und mindestens einen Wasserablauf besitzen, um das Getriebe vor äußeren Hitzeeinflüssen abzuschirmen.

Ein Stranggussgetriebe, das unmittelbar mit wasserführenden Kammern umgeben ist, kann vorteilhafterweise wesentlich besser äußeren Hitzeeinflüssen standhalten.

Gemäß Anspruch 1 sind die Kammern durch einen Raum zwischen der Außenseite des Getriebegehäuses und vorgelagerten Kühlplatten gebildet. Kühlplatten repräsentieren die der Außenseite des Getriebes gegenüberliegende Seitenwand der Kammer und sind gegenüber der Außenseite des Getriebegehäuses, bis auf den Wasserein- und -auslauf abgedichtet. Die Anordnung von Kühlplatten auf der Außenseite des Getriebes bewirkt, dass Wasser direkt zwischen der Außenwand des Getriebes und der Kühlplattenwandung strömen kann. Solche Kühlplatten können auch bei bereits bestehenden Getrieben nachgerüstet werden.

Dadurch, dass die Kühlplatten abnehmbar sind, sind sie für baugleiche Getriebe wiederverwendbar. Außerdem können sie zu Wartungszwecken demontiert werden, wozu, je nach Anwendung, auch eine Wartungsöffnung bzw. Klappe dienen kann.

Gemäß einer zweiten bevorzugten Ausführungsform sind die Kammern als Höhlräume im (mehrwandigen) Getriebegehäuse ausgebildet.

In einer weiteren bevorzugten Ausführungsform des Stranggussgetriebes befinden sich die Kammern auf allen Seiten des Getriebes. Dadurch, dass die Kammern auf allen Seiten des Getriebes angeordnet werden, wird ein sehr wirkungsvoller Hitzeschild für das gesamte Getriebe realisiert.

In einer weiteren bevorzugten Ausführungsform des Stranggussgetriebes umfasst das Getriebe mindestens ein Hitzeschutzblech, das auf einer der Seiten des Getriebes angeordnet ist, wobei das Blech mit den wasserführenden Kammern zur Kühlung verbunden ist. Durch die Anordnung eines optionalen Hitzeschutzbleches kann die Kühlwirkung noch weiter verbessert werden, da ein solches Hitzeschutzblech sowohl Wärmestrahlung als auch Konvektion verhindern kann. Die Wärme des Blechs kann direkt über eine Verbindung mit den wasserführenden Kammern abgeleitet werden.

In einer weiteren bevorzugten Ausführungsform des Stranggussgetriebes ist das mindestens eine Hitzeschutzblech über Abstandsbolzen mit den wasserführenden Kammern verbunden, so dass die Wärme des Hitzeschutzbleches über die Abstandsbolzen an die wasserführenden Kammern abgeleitet werden kann.

In einer weiteren bevorzugten Ausführungsform des Stranggussgetriebes umfasst das Getriebe eine Abtriebswelle und ein Hitzeschutzblech, das auf der Seite der Abtriebswelle des Getriebes angeordnet ist und durch das die Abtriebswelle durch eine Bohrung hindurch geführt ist.

In einer weiteren bevorzugten Ausführungsform des Stranggussgetriebes umfasst das Getriebe eine Abdeckung, die auf der der Abtriebswelle gegenüberliegenden Seite des Getriebes angeordnet ist und die direkt mit den wasserführenden Kammern verbunden ist, so dass dort angeordnete Dichtungen und Lager vor Hitze geschützt werden. Die Abdeckung empfiehlt sich insbesondere bei Mehrstrang-Gießanlagen, bei den auch auf der der Abtriebswelle gegenüberliegenden Seite noch ein Parallelstrang geführt sein kann, der große Hitze in Richtung Getriebe abstrahlt.

In einer weiteren bevorzugten Ausführungsform des Stranggussgetriebes umfasst das Getriebe interne und / oder externe Bypasskanäle, die zwischen dem Wasserzulauf und dem Wasserablauf angeordnet sind, so dass eine selbsttätige Entlüftung der wasserführenden Kammern erfolgen kann.

Durch solche Bypasskanäle ist gewährleistet, dass sich keine Lufteinschlüsse innerhalb des Kühlsystems bilden können. Auch die Luft, die bei der ersten Inbetriebnahme möglicherweise ins System gelangt, kann entweichen.

In einer weiteren bevorzugten Ausführungsform des Stranggussgetriebes sind die Bypasskanäle an einer höchsten Stelle der Kammern angeordnet und / oder durch eine externe Leitung gebildet, die Luft in den Wasserablauf leitet.

In einer weiteren bevorzugten Ausführungsform des Stranggussgetriebes besitzen die wasserführenden Kammern jeweils einen Wasserzulauf und einen

Wasserablauf oder sind untereinander verbunden und besitzen einen gemeinsamen Wasserzulauf und Wasserablauf.

In einer weiteren bevorzugten Ausführungsform des Stranggussgetriebes wird das Wasser in den wasserführenden Kammern vom Wasserzulauf zum Wasserablauf durch Kanäle geführt.

In einer weiteren bevorzugten Ausführungsform des Stranggussgetriebes sind die Kanäle so angeordnet, dass das Wasser in den Kammern vom Wasserzulauf zum Wasserablauf mäanderförmig geführt wird.

Durch die Führung des Wassers in Kanälen oder insbesondere in mäanderförmigen Kanälen wird eine gleichmäßige Kühlung des Getriebes ermöglicht.

In einer weiteren bevorzugten Ausführungsform des Stranggussgetriebes umfassen die Kühlplatten Stege, die an den Kühlplatten in Richtung des Getriebegehäuses angeordnet sind und durch die die Kanäle zwischen den Kühlplatten und dem Getriebegehäuse gebildet sind.

In einer weiteren bevorzugten Ausführungsform des Stranggussgetriebes umfasst das Getriebe eine Abtriebswellendichtung, wobei vor der Abtriebswellendichtung, die die Abtriebswelle zur Außenseite des Getriebegehäuses hin abdichtet, an der Außenseite des Getriebegehäuses mindestens eine weitere Abtriebswellendichtung angeordnet ist, so dass letztere als Opferteil dienen kann.

Wellendichtungen sind relativ empfindlich und werden durch Hitzeeinwirkung brüchig und schließlich undicht. Damit die Dichtung nicht undicht wird, was im schlimmsten Falle zu einem Getriebeschaden führen kann, wird eine zweite Dichtung als Opferteil vor der eigentlichen Dichtung nach außen hin angeordnet.

### Kurze Beschreibung der Figuren

Im Folgenden werden kurz die Figuren der Ausführungsbeispiele beschrieben. Weitere Details sind der detaillierten Beschreibung der Ausführungsbeispiele zu entnehmen. Es zeigen:
- Figur 1a: eine schematische Seitenansicht eines erfindungsgemäßen Ausführungsbeispiels eines Stranggussgetriebes, an das wasserführende Kammern und Hitzeschutzbleche angebracht sind;
- Figur 1b: eine schematische Seitenansicht des in Figur 1a gezeigten Stranggussgetriebes mit Blick auf die gegenüberliegende Seite des Getriebes;
- Figur 1c: eine schematische Draufsicht von oben auf das erfindungsgemäße Ausführungsbeispiel eines Stranggussgetriebes nach den Figuren 1a und 1b;
- Figur 2a: einen schematischen Querschnitt einer weiteren erfindungsgemäßen Ausführungsform eines Stranggussgetriebes, das mit wasserführenden Kammern umgeben ist;
- Figur 2b: eine schematische Seitenansicht des Stranggussgetriebes aus Figur 2a;
- Figur 2c: einen schematischen Querschnitt eines Stranggussgetriebes nach Figur 2a, wobei durch die gestrichelten Linien Wasserablauf und Entlüftung dargestellt sind;
- Figur 3: eine perspektivische Ansicht zweier erfindungsgemäßer Stranggussgetriebehälften mit wasserführenden Kammern;
- Figur 4a: zeigt mögliche Einbaupositionen eines Stranggussgetriebes nach den Figuren 1a bis 1c;
- Figur 4b: zeigt mögliche Einbaupositionen eines Stranggussgetriebes nach den Figuren 2a bis 2c;
- Figur 5a: zeigt eine Seitenansicht und eine Draufsicht auf die Ausgangsseite eines erfindungsgemäßen Stirnrad-Stranggussgetriebes in Verbindung mit einem Motor;
- Figur 5b: zeigt zwei Seitenansichten eines erfindungsgemäßen Kegelstirnrad-Stranggussgetriebes.

### Detaillierte Beschreibung der Ausführungsbeispiele

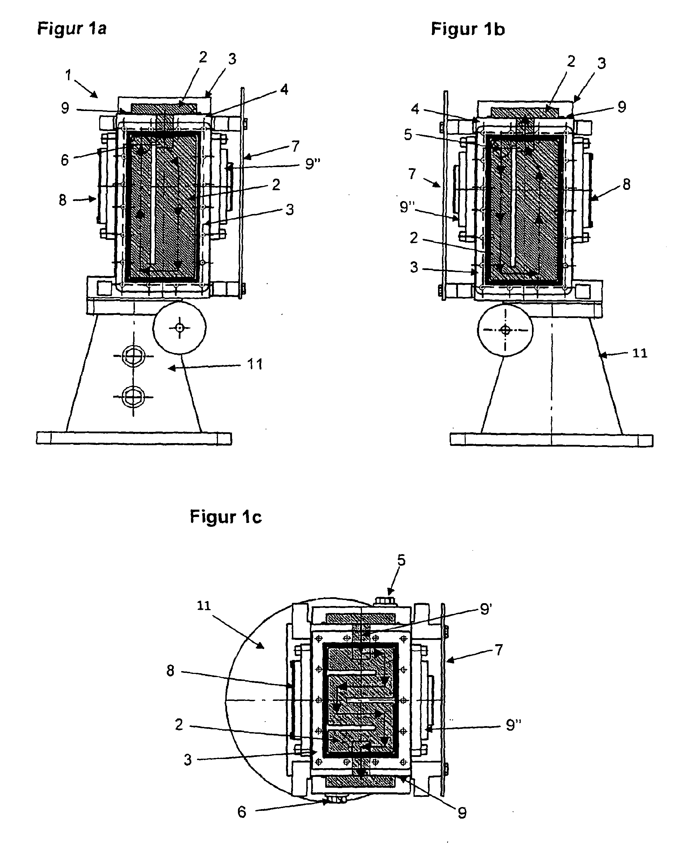

In Figur 1a ist ein Stranggussgetriebe 1 gezeigt, insbesondere ein Kegelstirnradgetriebe, das mit einem Motor eingangsseitig über einen Flansch 11 verbunden werden kann. Das Getriebe 1 besteht in diesem Ausführungsbeispiel aus zwei Getriebehälften, die durch ein Dichtung 9' (s. Fig. 1c) im zusammengesetzten Zustand abgedichtet werden. Das erfindungsgemäße Getriebe ist dabei mit Kühlwasserkammern 2 umgeben. Ausgangsseitig wird das Getriebe über eine Welle mit einer Rolle bzw. einer Walze verbunden (nicht gezeigt). Diese Welle (Abtriebswelle) erstreckt sich durch eine Öffnung im Hitzeschutzblech 7, das auf der Ausgangsseite (Abtriebsseite) des Getriebes 1 angeordnet ist. Auf der gegenüberliegenden Seite ist ebenfalls ein Abdeckblech 8 angeordnet, das ebenso wie die Kühlkammern 2 und das Hitzeschutzblech 7 auf der Abtriebsseite zur Hitzeabschirmung dient. Die Bleche 7, 8 sind dabei mit den Kühlwasserkammern 2 verbunden, damit die Wärme der Bleche 7, 8 direkt über das Kühlwasser abgeleitet werden kann. Durch die Kammern 2, die direkt in Form einer Platte 3, abgedichtet durch Dichtungen 9, auf das Gehäuse des Stranggussgetriebes 1 aufgesetzt werden, wird im Ausführungsbeispiel Wasser geleitet. Die Kammern 2 sind dabei an den Wänden des Getriebes 1 angeordnet. Die Kammern 2 sind vorzugsweise durch Passagen miteinander verbunden, so dass das Kühlwasser, das durch einen Wasserzulauf 5 in eine erste Kammer 2 einströmt, in die Kammer 2 auf der oberen Seite des Getriebes gelangt und durch eine weitere Passage mit der seitlichen Kühlplatte 2 (Figur 1a) verbunden ist und das Wasser wieder mittels des Wasserabflusses 6 abgeleitet wird. Der Wasserkreislauf kann dabei entweder geschlossen oder auch offen sein. In den Kammern 2 kann das Wasser zwangsgeführt werden, wie durch die Pfeile in den Abbildungen 1a bis 1c gezeigt ist. Durch diese Zwangsführung kann gewährleistet werden, dass sich kein heißes Kühlwasser an bestimmten Stellen in einer Kammer 2 sammelt. Die Zwangsführung wird dabei durch Kanäle und entsprechend angeordnete Stege gewährleistet, die die Kanäle bilden. Wie in den Figuren gezeigt verlaufen die Kanäle bspw. mäanderförmig. Die Form der Kanäle kann aber auch anders ausgebildet sein, so dass eine gleichmäßige Kühlung gewährleistet wird. Die Stege befinden sich vorzugsweise an den Platten 3, die auf das Getriebegehäuse 4 aufgesetzt werden. In dem Ausführungsbeispiel der Figuren 1a bis 1c sind die Platten 3 vorzugsweise abnehmbar und z. B. mittels Schrauben mit dem Getriebegehäuse 4 verschraubt und mit den Dichtungen 9 abgedichtet. Dadurch, dass die Platten 3 abnehmbar sind, kann eine Wartung der Kühlungsvorrichtung oder von Getriebekomponenten ohne ein Zerlegen des Getriebes 1 erfolgen. Falls gewünscht, können die Platten 3 auch auf das Gehäuse 4 aufgeschweißt werden.

Generell ist es auch möglich entsprechend ausgebildete Kühlkammern 2 auf allen Seiten des Gehäuses 4 vorzusehen, so dass sie falls gewünscht das Getriebe 1 vollständig umschließen, wobei lediglich Öffnungen für Eingang und Ausgang der Antriebs- und der Abtriebswellen vorgesehen sind. Darüber hinaus ist im erfindungsgemäßen Ausführungsbeispiel eine zweite Dichtung 9" für die Abtriebswelle vorgesehen, die als Opferdichtung vor der eigentlichen Dichtung dient. Diese Dichtung ist daher vor der gewöhnlichen Wellendichtung angeordnet, das heißt nach außen hin, in Richtung der Hitzeeinwirkung, angeordnet. Ferner ist es möglich, dass Hitzeschutzbleche, wie die Bleche 7 und 8, auf weiteren Seiten des Getriebes 1 angeordnet werden, bzw. das Getriebe 1 vollständig umschließen. Die Schutzbleche können dabei über Abstandsbolzen mit dem Getriebegehäuse 4 bzw. den wasserführenden Kammern 2 verbunden sein, wie für das Hitzeschutzblech 7 in der Abbildung der Figuren 1a-c gezeigt oder auch auf eine andere Art und Weise fest oder lösbar mit dem Getriebegehäuse 4 bzw. mit den wasserführenden Kammern 2 verbunden sein.

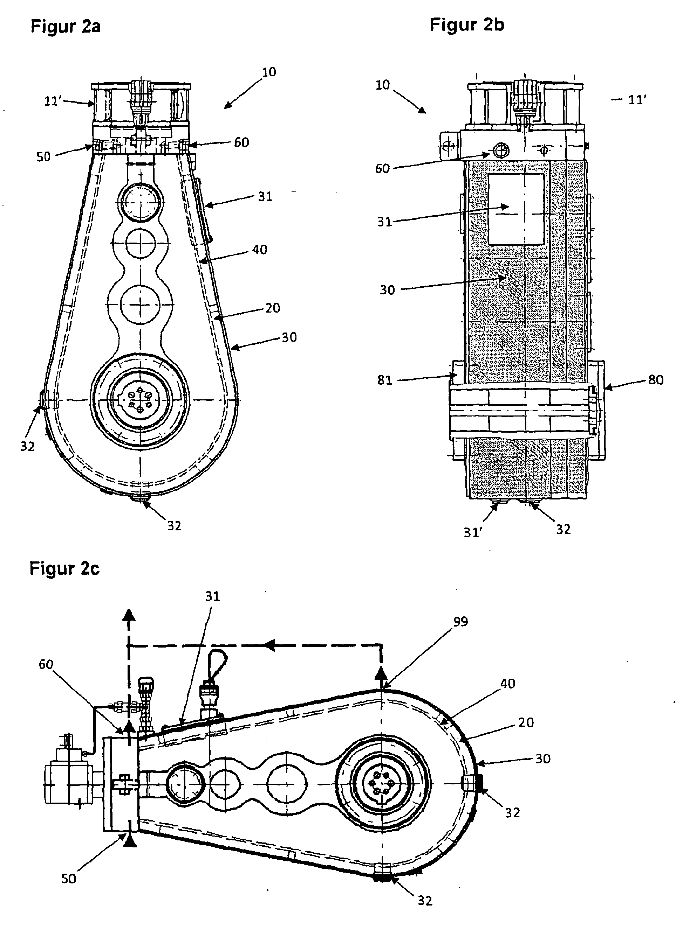

Figur 2 zeigt ein weiteres erfindungsgemäßes Ausführungsbeispiel 10 eines Kegelstirnradgetriebes für den Stranggussbetrieb. Dabei ist das Getriebegehäuse 40 von wasserführenden Kammern 20 umgeben. Die Platten 30 sind vorzugsweise mit dem Getriebegehäuse verschweißt, können aber auch abnehmbar mit dem Gehäuse 40 verbunden bzw. verschraubt sein. Die Kammern 20 besitzen dabei sowohl einen Zulauf 50 als auch einen Ablauf 60 sowie vorzugsweise Revisionsöffnungen 31, 31'. Solche Revisionsöffnungen erleichtern die Wartung des Getriebes 10 und die der Kühlvorrichtung erheblich. Die wasserführenden Kammern 20 umschließen bzw. umfassen dabei das Getriebe 10. Lediglich die Seite an der sich der Flansch 11' für die Verbindung mit einem Motor befindet (Antriebsseite) ist nicht mit einer wasserführenden Kammer 20 versehen. Es ist erfindungsgemäß aber auch möglich dort wasserführende Kammern 20 vorzusehen und lediglich die Antriebswelle zwischen Motor und Getriebe 10 durch eine Öffnung in einer solchen Kammer 20 hindurchzuführen.

Weiterhin ist für eine Abtriebswelle (nicht gezeigt) eine Öffnung vorgesehen, die von einer zusätzlichen Opferdichtung 81 (ähnlich wie im Ausführungsbeispiel nach den Figuren 1a-1c) umgeben ist und eine Abdeckplatte bzw. ein Abdeckblech 80, das die gegenüberliegende Seite der Abtriebsseite des Getriebes vor Hitze schützt. Ferner können die Kammern 20 mit Wasserentleerungen 32 versehen werden, um das Wasser in den Kammern 20 des Getriebes 10 zum Beispiel vor Beginn einer frostgefährdeten Lagerung vollständig zu entleeren.

Figur 2c verdeutlicht insbesondere die Möglichkeit einer erfindungsgemäßen Entlüftung eines Stranggussgetriebes 10, dabei wird die in der Abbildung am höchsten liegende Stelle des Getriebes mit einer Entlüftungsöffnung 99 versehen, an der sich bevorzugt Luft ansammelt. Diese Luft kann gemäß dem Ausführungsbeispiel durch die Wasserleitung, die vom Wasserablauf 60 wegführt, abgeleitet werden (s. gestrichelte Linie). Es sind darüber hinaus generell Entlüftungen durch Bypasskanäle denkbar, die auch intern im Gehäuse 40 oder in den Platten 30 in Form von Bohrungen vorgesehen sein können oder auch andere externe Bypässe. Um eine Entlüftung eventuell zu umgehen oder weniger Entlüftungsleitungen vorzusehen, können die wasserführenden Kammern 20 auch insbesondere sehr strömungsgünstig ausgebildet werden, so dass sich keine oder nur sehr wenig Luft in den Kammern 20 sammeln kann.

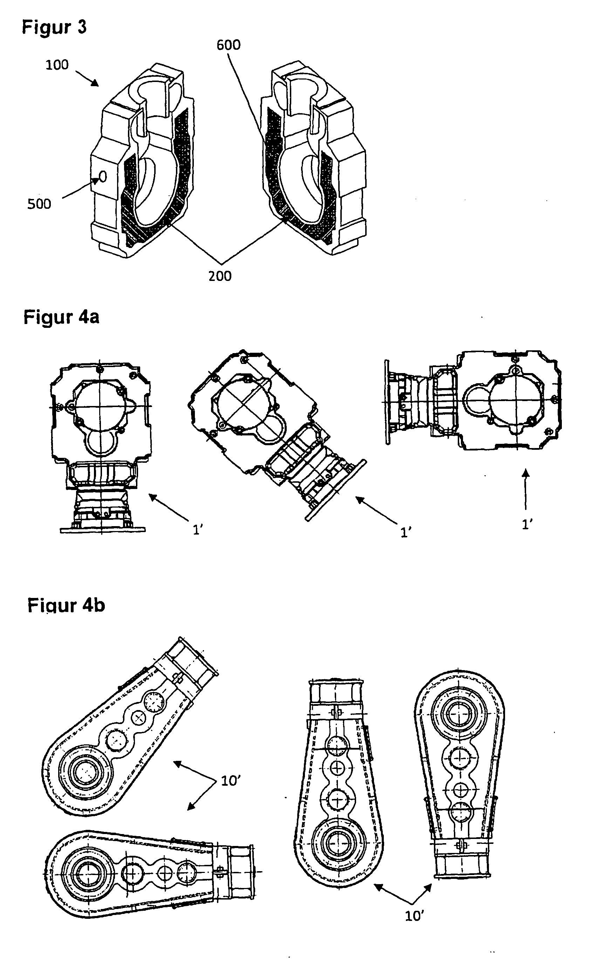

Figur 3 zeigt ein weiteres erfindungsgemäßes Ausführungsbeispiel eines Stranggussgetriebes 100, wobei das Stranggussgetriebe 100 mit wasserführenden Kammern 200 umgeben ist. Es handelt sich bei diesem Ausführungsbeispiel um eine Gusskonstruktion. Das Wasser gelangt in diesem Ausführungsbeispiel durch den Wasserzulauf 500 in die wasserführenden Kammern und wird durch den Wasserablauf 600 wieder aus den Kammern geleitet.

Generell können die aufgeführten Merkmale aller Ausführungsbeispiele miteinander kombiniert werden und sind nicht auf eines der Ausführungsbeispiele beschränkt.

Figur 4a zeigt der Vollständigkeit halber verschiedene typische Einbaulagen von Stranggussgetrieben 1', der Reihe nach in einer vertikalen, in einer schrägen oder in einer horizontalen Einbaulage. Die dargestellten Getriebe 1' weisen im Wesentlichen die Grundform des Getriebes 1 auf. In Figur 4b sind verschiedene Einbaulagen eines Getriebes 10', analog zu einem Getriebe 10, gezeigt. Die verschiedenen dargestellten Einbaulagen verdeutlichen, dass die Getriebe 10 auf vielfältige Art und Weise betrieben werden können, so dass dementsprechend zum Beispiel im höchst-liegenden Bereich der wasserführenden Kammern eine Entlüftung anzubringen ist.

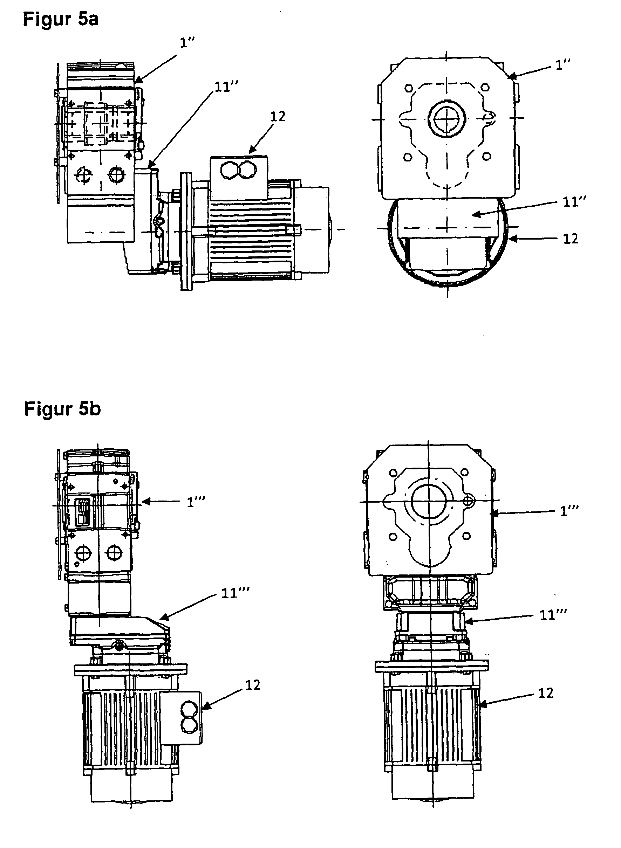

Die Figur 5a zeigt ein Getriebe 1", ähnlich dem Getriebe 1, das über einen Flansch 11" mit einem Motor 12 verbunden ist. Es handelt sich in der Figur 5a allerdings um ein Stirnradgetriebe.

Schließlich zeigt Figur 5b schematisch ein Kegelstirnradgetriebe 1'", analog dem Stranggussgetriebe 1, wobei das Getriebe 1"' über einen Flansch 11"' mit einem Motor 12 verbunden ist.

### Bezugszeichenliste

| | |
|---|---|
| 1 | Stranggussgetriebe |
| 1' | Stranggussgetriebe |
| 1' | Stranggussgetriebe |
| 1"' | Stranggussgetriebe |
| 2 | wasserführende Kammer |
| 3 | Platte |
| 4 | Getriebegehäuse |
| 5 | Wasserzulauf |
| 6 | Wasserablauf |
| 7 | Hitzeschutzblech |
| 8 | Deckel |
| 9 | Kammer-Dichtung |
| 9' | Gehäuse-Dichtungen |
| 9" | Wellendichtung |
| 10 | Stranggussgetriebe |
| 10' | Stranggussgetriebe |
| 11 | Flansch |
| 11' | Flansch |
| 11" | Flansch |
| 11"' | Flansch |
| 12 | Motor |
| 20 | wasserführende Kammer |
| 30 | Platte |
| 31 | Wartungsöffnung |
| 31' | Wartungsöffnung |
| 32 | Wasserentleerung |
| 40 | Getriebegehäuse |
| 50 | Wasserzulauf |
| 60 | Wasserablauf |
| 80 | Deckel |
| 81 | Wellendichtung |
| 99 | Entlüftung |
| 100 | Stranggussgetriebe |
| 200 | Kammer |
| 500 | Wasserzulauf |
| 600 | Wasserablauf |

## Patentansprüche

1. Stranggussgetriebe, wobei
das Getriebe ein Gehäuse umfasst,
das Stranggussgetriebe (1, 10, 100) mindestens eine wasserführende Kammer (2, 20, 200) umfasst, die das Getriebegehäuse unmittelbar umgibt, so dass das Getriebe (1, 10, 100) vor äußeren Hitzeeinflüssen abgeschirmt ist, und
die wasserführende Kammer (2, 20, 200) mindestens einen Wasserzulauf (5, 50, 500) und mindestens einen Wasserablauf (6, 60, 600) besitzt; **dadurch gekennzeichnet,**
**dass** das Stranggussgetriebe (1, 10) Kühlplatten (3, 30) umfasst, die an der Außenseite des Getriebegehäuses (4, 40) angeordnet und gegenüber der Außenwand abgedichtet sind und wobei die wasserführende Kammer (2, 20) durch den Raum zwischen den Kühlplatten (3, 30) und der Außenseite des Getriebegehäuses (4, 40) gebildet ist; und
**dass** die Kühlplatten (3, 30) abnehmbar sind und / oder Wartungsöffnungen (31, 31') besitzen.

2. Das Stranggießgetriebe nach Anspruch 1,
wobei die wasserführende Kammer als Hohlraum in dem Getriebegehäuse ausgebildet ist.

3. Das Stranggussgetriebe nach einem der vorangegangenen Ansprüche,
wobei sich die wasserführenden Kammern (2, 20, 200) auf allen Seiten des Getriebegehäuses befinden.

4. Das Stranggussgetriebe nach einem der vorhergehenden Ansprüche,
wobei das Getriebe (1, 10, 100) mindestens ein Hitzeschutzblech (7) umfasst, das auf einer der Seiten des Getriebegehäuses (1, 10, 100) angeordnet ist und das Blech (7) mit den wasserführenden Kammern (2, 20, 200) zur Kühlung wärmeleitend verbunden ist.

5. Das Stranggussgetriebe nach Anspruch 4,
wobei das mindestens eine Hitzeschutzblech (7) über Abstandsbolzen mit den wasserführenden Kammern (2, 20, 200) verbunden ist, so dass die Wärme des Hitzeschutzbleches (7) über die Abstandsbolzen an die wasserführenden Kammern (2, 20, 200) abgeleitet werden kann.

6. Das Stranggussgetriebe nach Anspruch 4 oder 5,
wobei das Getriebe (1, 10, 100) eine Abtriebswelle umfasst und ein Hitzeschutzblech (7) auf der Seite der Abtriebswelle des Getriebes (1, 10, 100) angeordnet ist, durch das die Abtriebswelle durch eine Bohrung in dem Hitzeschutzblech hindurch geführt ist.

7. Das Stranggussgetriebe nach Anspruch 6,
wobei das Getriebe (1, 10, 100) eine Abdeckung (8, 80) umfasst, die auf der der Abtriebswelle gegenüberliegenden Seite des Getriebes (1, 10, 100) angeordnet ist und die direkt mit den wasserführenden Kammern (2, 20, 200) verbunden ist, so dass dort angeordnete Dichtungen und Lager vor Hitze geschützt werden.

8. Das Stranggussgetriebe nach einem der vorhergehenden Ansprüche,
wobei das Getriebe (1, 10, 100) interne und / oder externe Bypasskanäle umfasst, die zwischen dem Wasserzulauf (5, 50, 500) und dem Wasserablauf (6, 60, 600) angeordnet sind.

9. Das Stranggussgetriebe nach Anspruch 8,
wobei die Bypasskanäle an einer höchsten Stelle (99) der Kammern (2, 20, 200) angeordnet sind und / oder durch eine externe Leitung gebildet sind, die Luft in den Wasserablauf (6, 60, 600) leitet.

10. Das Stranggussgetriebe nach einem der vorhergehenden Ansprüche,
wobei die wasserführenden Kammern (2, 20, 200) jeweils einen Wasserzulauf (5, 50, 500) und einen Wasserablauf (6, 60, 600) besitzen oder untereinander verbunden sind und einen gemeinsamen Wasserzulauf (5, 50, 500) und Wasserablauf (6, 60, 600) besitzen.

11. Das Stranggussgetriebe nach einem der vorhergehenden Ansprüche,
wobei das Wasser in den wasserführenden Kammern (2, 20, 200) vom Wasserzulauf (5, 50, 500) zum Wasserablauf (6, 60 ,600) durch Kanäle geführt wird.

12. Das Stranggussgetriebe nach Anspruch 11,
wobei die Kanäle so angeordnet sind, dass das Wasser in den Kammern (2, 20, 200) vom Wasserzulauf (5, 50, 500) zum Wasserablauf (6, 60, 600) mäanderförmig geführt wird.

13. Das Stranggussgetriebe nach Ansprüche 1 und 11 oder 12,
wobei an den Kühlplatten (3, 30) Stege angeordnet sind, welche sich in Richtung des Getriebegehäuses (4, 40) erstrecken, und durch die die Kanäle zwischen den Kühlplatten (3, 30) und dem Getriebegehäuse (4, 40) gebildet sind.

14. Das Stranggussgetriebe nach einem der vorhergehenden Ansprüche,
wobei das Getriebe (1, 10, 100) eine Abtriebswellendichtung umfasst und vor der Abtriebswellendichtung, die die Abtriebswelle zur Außenseite des Getriebegehäuses hin abdichtet, an der Außenseite des Getriebegehäuses mindestens eine weitere Abtriebswellendichtung (9", 81) angeordnet ist, so dass letztere als Opferteil dienen kann.

## Claims

1. Continuous casting transmission, wherein the transmission comprises a housing, the continuous casting transmission (1, 10, 100) comprises at least one water-conducting chamber (2, 20, 200) directly surrounding the transmission housing so that the transmission (1, 10, 100) is shielded from external heating influences, and the water-conducting chamber (2, 20, 200) has at least one water feed (5, 50, 500) and at least one water drain (6, 60, 600), **characterised in that** the continuous casting transmission (1, 10) comprises cooling plates (3, 30), which are arranged at the outer side of the transmission housing (4, 40) and sealed relative to the outer wall, and wherein the water-conducting chamber (2, 20) is formed by the space between the cooling plates (3, 30) and the outer side of the transmission housing (4, 40), and that the cooling plates (3, 30) are removable and/or have maintenance openings (31, 31').

2. Continuous casting transmission according to claim 1, wherein the water-conducting chamber is constructed as a cavity in the transmission housing.

3. Continuous casting transmission according to one of the preceding claims, wherein the water-conducting chambers (2, 20, 200) are disposed on all sides of the transmission housing.

4. Continuous casting transmission according to any one of the preceding claims, wherein the transmission (1, 10, 100) comprises at least one heat protection plate (7) arranged on one of the sides of the transmission housing (1, 10, 100) and the plate (7) is thermally conductively connected with the water-conducting chambers (2, 20, 200) for cooling.

5. Continuous casting transmission according to claim 4, wherein the at least one heat protection plate (7) is connected with the water-conducting chambers (2, 20, 200) by way of spacer pins so that the heat of the heat protection plate (7) can be conducted to the water-conducting chambers (2, 20, 200) by way of the spacer pins.

6. Continuous casting transmission according to claim 4 or 5, wherein the transmission (1, 10, 100) comprises an output shaft, and a heat protection plate (7) is arranged at the end of the output shaft of the transmission (1, 10, 100), through which the output shaft is led via a bore in the heat protection plate.

7. Continuous casting transmission according to claim 6, wherein the transmission (1, 10, 100) comprises a cover (8, 80), which is arranged on the side of the transmission (1, 10, 100) opposite the output shaft and which is directly connected with the water-conducting chambers (2, 20, 200) so that seals and bearings arranged there are protected from heat.

8. Continuous casting transmission according to any one of the preceding claims, wherein the transmission (1, 10, 100) comprises internal and/or external bypass channels arranged between the water feed (5, 50, 500) and the water drain (6, 60, 600).

9. Continuous casting transmission according to claim 8, wherein the bypass channels are arranged at a highest point (99) of the chambers (2, 20, 200) and/or are formed by an external line which conducts air into the water drain (6, 60, 600).

10. Continuous casting transmission according to any one of the preceding claims, wherein the water-conducting chambers (2, 20, 200) each have a water feed (5, 50, 500) and a water drain (6, 60, 600) or are interconnected and have a common water feed (5, 50, 500) and water drain (6, 60, 600).

11. Continuous casting transmission according to any one of the preceding claims, wherein the water is conducted into the water-conducting chambers (2, 20, 200) from the water feed (5, 50, 500) to the water drain (6, 60, 600) via channels.

12. Continuous casting transmission according to claim 11, wherein the channels are so arranged that the water is conducted into the chambers (2, 20, 200) in meander form from the water feed (5, 50, 500) to the water drain (6, 60, 600).

13. Continuous casting transmission according to claims 1 and 11 or 12, wherein arranged at the cooling plates (3, 30) are webs which extend in the direction of the transmission housing (4, 40) and by which the channels between the cooling plates (3, 30) and the transmission housing (4, 40) are formed.

14. Continuous casting transmission according to any one of the preceding claims, wherein the transmission (1, 10, 100) comprises an output shaft seal, and arranged at the outer side of the transmission housing in front of the output shaft seal, which seals off the output shaft with respect to the outer side of the transmission housing, is at least one further output shaft seal (9", 81), so that the latter can serve as a sacrificial part.

## Revendications

1. Engrenage pour coulée continue, dans lequel l'engrenage comprend un logement ;
l'engrenage pour coulée continue (1, 10, 100) comprend au moins une chambre pour le guidage de l'eau (2, 20, 200) qui entoure directement le logement d'engrenage, de telle sorte que l'engrenage (1, 10, 100) est protégé contre les impacts de chaleur externes, et
la chambre pour le guidage de l'eau (2, 20, 200) possède au moins une arrivée pour l'eau (5, 50, 500) et au moins une évacuation pour l'eau (6, 60, 600),
**caractérisé en ce que** l'engrenage pour coulée continue (1, 10) comprend des plaques de refroidissement (3, 30) qui sont disposées à l'extérieur du logement d'engrenage (4, 40) et qui sont rendues étanches par rapport à la paroi externe, et la chambre pour le guidage de l'eau (2, 20, 200) est formée par l'espace ménagé entre les plaques de refroidissement (3, 30) et le côté externe du logement d'engrenage (4, 40), et
**en ce que** les plaques de refroidissement (3, 30) sont amovibles et/ou possèdent des ouvertures (31, 31') pour l'entretien.

2. Engrenage pour coulée continue selon la revendication 1, dans lequel la chambre pour le guidage de l'eau est réalisée sous la forme d'un espace creux dans le logement d'engrenage.

3. Engrenage pour coulée continue selon l'une quelconque des revendications précédentes, dans lequel les chambres pour le guidage de l'eau (2, 20, 200) sont disposées sur tous les côtés du logement d'engrenage.

4. Engrenage pour coulée continue selon l'une quelconque des revendications précédentes, dans lequel l'engrenage (1, 10, 100) comprend au moins une tôle de protection contre la chaleur (7) qui est disposée sur un des côtés du logement d'engrenage (1, 10, 100) et la tôle (7) est reliée en conduction thermique aux chambres pour le guidage de l'eau (2, 20, 200) à des fins de refroidissement.

5. Engrenage pour coulée continue selon la revendication 4, dans lequel ladite au moins une tôle de protection contre la chaleur (7) est reliée aux chambres pour le guidage de l'eau (2, 20, 200) à l'aide d'entretoises, si bien que la chaleur de la tôle de protection contre la chaleur (7) peut être évacuée via les entretoises contre les chambres pour le guidage de l'eau (2, 20, 200).

6. Engrenage pour coulée continue selon la revendication 4 ou 5, dans lequel l'engrenage (1, 10, 100) comprend un arbre d'entraînement et une tôle de protection contre la chaleur (7) est disposée sur le côté de l'arbre d'entraînement de l'engrenage (1, 10, 100), l'arbre d'entraînement étant guidé via un alésage à travers la tôle de protection contre la chaleur.

7. Engrenage pour coulée continue selon la revendication 6, dans lequel l'engrenage (1, 10, 100) comprend un couvercle de protection (8, 80) qui est disposé sur le côté de l'engrenage (1, 10, 100) opposé à l'arbre d'entraînement et qui est relié directement aux chambres pour le guidage de l'eau (2, 20, 200), si bien que les paliers et les joints d'étanchéité qui y sont disposés sont protégés contre la chaleur.

8. Engrenage pour coulée continue selon l'une quelconque des revendications précédentes, dans lequel l'engrenage (1, 10, 100) comprend des canaux de dérivation internes et/ou externes qui sont disposés entre l'arrivée pour l'eau (5, 50, 500) et l'évacuation pour l'eau (6, 60, 600).

9. Engrenage pour coulée continue selon la revendication 8, dans lequel les canaux de dérivation sont disposés à l'endroit le plus haut (99) des chambres (2, 20, 200) et/ou sont formés par un conduit externe qui guide l'air dans l'évacuation pour l'eau (6, 60, 600).

10. Engrenage pour coulée continue selon l'une quelconque des revendications précédentes, dans lequel les chambres pour le guidage de l'eau (2, 20, 200) possèdent respectivement une arrivée pour l'eau (5, 50, 500) et une évacuation pour l'eau (6, 60, 600) ou bien sont reliées l'une à l'autre et possèdent une arrivée pour l'eau (5, 50, 500) et une évacuation pour l'eau (6, 60, 600) en commun.

11. Engrenage pour coulée continue selon l'une quelconque des revendications précédentes, dans lequel l'eau est guidée dans les chambres pour le guidage de l'eau (2, 20, 200) depuis l'arrivée pour l'eau (5, 50, 500) jusqu'à l'évacuation pour l'eau (6, 60, 600) par des canaux.

12. Engrenage pour coulée continue selon la revendication 11, dans lequel les canaux sont disposés de telle sorte que l'eau est guidée dans les chambres (2, 20, 200) depuis l'arrivée pour l'eau (5, 50, 500) jusqu'à l'évacuation pour l'eau (6, 60, 600) en formant des méandres.

13. Engrenage pour coulée continue selon la revendication 11 ou 12, dans lequel des traverses sont disposées contre les plaques de refroidissement (3, 30) qui s'étendent dans la direction du logement d'engrenage (4, 40) et à travers lesquelles sont formés les canaux entre les plaques de refroidissement (3, 30) et le logement d'engrenage (4, 40).

14. Engrenage pour coulée continue selon l'une quelconque des revendications précédentes, dans lequel l'engrenage (1, 10, 100) comprend un joint d'étanchéité d'arbre d'entraînement et, avant le joint d'étanchéité d'arbre d'entraînement qui confère une étanchéité à l'arbre d'entraînement par rapport au côté externe du logement d'engrenage, est disposé, à l'extérieur du logement d'engrenage, au moins un joint d'étanchéité d'arbre d'entraînement supplémentaire (9", 81), si bien que ce dernier peut faire office d'élément sacrificiel.
